# EUROPEAN PATENT APPLICATION

(11) **EP 2 099 177 A1**
(43) Date of publication of application: **09.09.2009**
(21) Application number: 08102329.3
(22) Date of filing: 06.03.2008
(51) Int. Cl.: H04L 12/56, H04N 7/68

(54) **A method for transferring data packets, computer network assembly and adapted network station**

(71) Applicant: Deutsche Thomson OHG, 30625 Hannover (DE)
(72) Inventor: Aust, Andreas, 30177, Hannover (DE); Köhler, Ralf, 30455, Hannover (DE); Gläser, Frank, 30449 Hannover (DE); Kubsch, Stefan, 31559, Hohnhorst (DE); Siemens, Eduard, 31319, Sehnde (DE); Brocke, Jens, 30880, Laatzen (DE)
(74) Representative: Schäferjohann, Volker

(57) **Abstract**

The invention relates to a method for transferring data packets from a source entity (10) connected to a network into a destination entity (20) by a zero-copy mechanism over a data transfer connection, the method comprising steps of: sending, by the source entity (10), the data packets received from the network to the destination entity (20) over the data packet transfer connection, receiving the data packets by the storage entity (20), and storing the received data packets in a memory space of the destination entity (20) according to a data packet memory assignment (50), wherein for the received data packets a consistency of order check is performed for the received data packets, and the data packet memory assignment (50) is updated according to a data packet order update information indicating an inconsistency of order in the received data packets when the inconsistency of order is observed in the consistency of order check. The invention further relates to a computer network assembly, especially a video or film production computer network assembly, comprising a software-implemented order check module configured to perform the method. The invention also relates to an adapted network station.

## Description

The invention relates to a method for transferring data packets, a computer network assembly and an adapted network station.

### Background of the Invention

In video and film production environments high resolution video material needs to be transferred over high speed networks. In some cases, the video is streamed from a storage device to a display device via RTP (Real-time Transport Protocol), with a high data rate. For example, streaming 4k video material in real-time can result in data rates around 10 Gbps depending on frame rate, color depth, etc. The display device, e.g., a PC with multiple graphic boards connected to projectors, needs to handle this high data rate. In order to achieve this, the overhead of copying data needs to be kept at a minimum. Therefore, the received RTP payload is directly placed into the system's graphic memory.

The problem here is that, in case a data packet gets lost or several data packets don't arrive in correct order, the corresponding video frame won't be displayed correctly and, in case of data packet loss, all subsequent frames won't be either. A known solution to this problem is the usage of a reliable protocol. Thus there won't be any data packet losses. Unfortunately, reliable protocols like TCP cannot handle this high data rate when there is a significant distance between source and destination. So transferring, e.g., a 4k video from a post production site at the US west coast to a demo room at the east coast won't be possible.

Another approach is to buffer the received data, check it for consistency, apply error correction if necessary and then copy the processed data to the graphic memory. The introduced copying overhead can be considered significant at data rates around 10 Gbps.

An unreliable protocol with the potential risk of data packet loss, e.g., RTP, may be used to stream high resolution video content. High data rates around 10 Gbps can only be handled by currently available PC systems in an efficient way when applying zero-copy mechanisms. The conventional approach to video playback through a network might introduce several copying steps. Data blocks are transferred from the network interface card (NIC) to kernel space memory and from kernel space to user space. Then, the application needs to provide the data to the graphics card, and the data is copied from user space to kernel space (the onboard graphics memory) again. These many data movement operations are highly inefficient and make real-time playback of 4k videos almost impossible with currently available PC hardware. By using scatter gather lists, the unnecessary intermediate data copying can be avoided. The lists can be set up in a way that RTP header information is directly placed from the NIC into the user space memory and RTP payload is directly transferred from the NIC to the graphics memory. But in case a data packet gets lost, all subsequent data will be placed in the wrong memory location and the displayed video frames will be corrupted.

### The invention

It is the object of the invention to provide an improved method for transferring data packets from a source entity connected to a network into a destination entity by a zero-copy mechanism over a data transfer connection. The source entity could be a camera or a hard disk storage system.

According to an aspect of the invention, a method for transferring data packets from a source entity connected to a network into a destination entity by a zero-copy mechanism over a data transfer connection is provided, the comprising steps of: sending, by the source entity, the data packets received from the network to the destination entity over the data packet transfer connection, receiving the data packets by the storage entity, and storing the received data packets in a memory space of the destination entity according to a data packet memory assignment, wherein for the received data packets a consistency of order check is performed for the received data packets, and the data packet memory assignment is updated according to a data packet order update information indicating an inconsistency of order in the received data packets when the inconsistency of order is observed in the consistency of order check.

Another aspect of the invention relates to a computer network assembly, especially a video or film production computer network assembly, comprising a software-implemented order check module configured to perform the method for transferring data packets from a source entity connected to a network into a destination entity by a zero-copy mechanism over a data transfer connection. A correspondingly adapted network station, in particular a destination entity for receiving the data packets and including the check module is also an embodiment of the invention.

An inconsistency of order which also be referred to as an inconsistency of sequence, for example, may be caused by the loss of one or more data packets. Also, there may be a mismatch of the original order of the data packets caused by the data packet transfer.

The destination entity may, for example, be provided as a hard disk storage or a video playout system.

An advantage of the invention is that it allows using conventional streaming techniques based on well known protocols like RTP to support high resolution real-time video streaming. Using datagram based unreliable protocols is especially advantageous when having long distance transmission. Using scatter gather lists in order to provide a zero-copy transmission of the data from the source entity to the storage entity is an approach known as such. But in case only one data packet gets lost, the entire subsequent data is put into the wrong memory location. The invention allows a resynchronization of the incoming data packets to their memory location in case of data packet loss or re-ordering. In case of small transmission errors, i.e., only very few data packet losses per second, only small regions of errors will be visible in the displayed video. But the subsequent data packets will be displayed correctly until another error occurs.

The present invention, in one embodiment, describes a method that frequently checks if data packets have been received in order or if data packets have been lost. In case a data packet loss is detected, the data packet memory assignment, e.g. a scatter gather list is updated immediately in order to make subsequent payload end up in the correct memory location. This will only introduce additional CPU utilization in case a transmission error occurs. During normal operations the CPU utilization regarding header analysis and movement of video payload remains very low.

In a preferred embodiment, the received data packets are stored according to a data packet memory assignment selected from the following group of data packet memory assignments: a scatter gather list, a memory assignment map, and a memory assignment table.

According to a further embodiment, the data packets are transferred as a video data packet stream.

In still a further embodiment, the consistency of order check comprises a header information check for the received data packets. For example, consistency of a sequence number progress may be checked in the consistency of order check. Other header fields e.g. a timestamp could also be used to check the correct order or to detect missing packets.

According to a preferred embodiment, a RTP protocol (RTP - "Real Time Transport") is used for sending the data packets over the data packet transfer connection.

In another preferred embodiment, for the received data packets the consistency of order check is performed for separated chunks of data packets made of a plurality of received data packets. The number of data packet related to the same chunk is configurable by a user in a preferred embodiment. For example, a chunk parameter may be set by the user.

In a preferred embodiment, at least one received data packet already stored in the memory space is corrected according to an error correction mechanism after the inconsistency of order is observed in the consistency of order check. The error correction mechanism may comprise a step of re-sorting the at least one received data packet already stored in the memory space in a preferred embodiment. In addition, further error correction mechanism may be applied. In case of a real packet loss the missing data can be replaced by data from the previous frame or by surrounding pixel data.

According to a further embodiment, the data packets received from the network are sent by a network interface card to the destination entity over the data packet transfer connection.

In still a further embodiment, the data packets are received by a graphic memory card, and the received data packets are stored in a graphic memory space provided in the graphic memory card.

According to a preferred embodiment of the computer network assembly, the order check module is configured to function with a driver module of a network card.

In another preferred embodiment of the computer network assembly, the order check module at least partially is implemented in the driver module of the network card.

In an embodiment, the order check module analyzes a configurable number of RTP data packets as a chunk and checks if the sequence number contained in the RTP headers increments by one for each consecutive data packet. A wrap around of the sequence counter due to limited bit width can be handled with prior art techniques. If e.g. the sequence number difference between two packets is larger than half of the value range than a wrap around of the sequnence number can be assumed. In case a leap is detected, the scatter gather list that contains pointers to the destination memory for incoming data is modified, or a mechanism responsible for sorting data packets within the graphics memory is initiated. Depending on the chunk size, i.e., the number of RTP data packets that is analyzed at once, the CPU utilization can be kept low. There is only increased CPU processing demand if an error is detected and already misplaced payload data packets have to be copied into the right memory location.

### Drawings

In the following, the invention will be described by means of advantageous embodiments with reference to figures. Herein:
- Fig. 1: shows a schematic representation of an assembly comprising a network interface card (NIC), a graphic card memory, a main memory, and a stream of data packets received by the NIC,
- Fig. 2: shows another schematic representation of the assembly in Fig. 1, wherein a loss of a data packet is schematically depicted,
- Fig. 3: shows a schematic representation of a subgroup of elements of the assembly in Fig. 1, and
- Fig. 4: shows a schematic representation for the placement of data packets in the graphic card memory.

Following, a detailed description is provided for a simplified example stream transporting a very low resolution video.

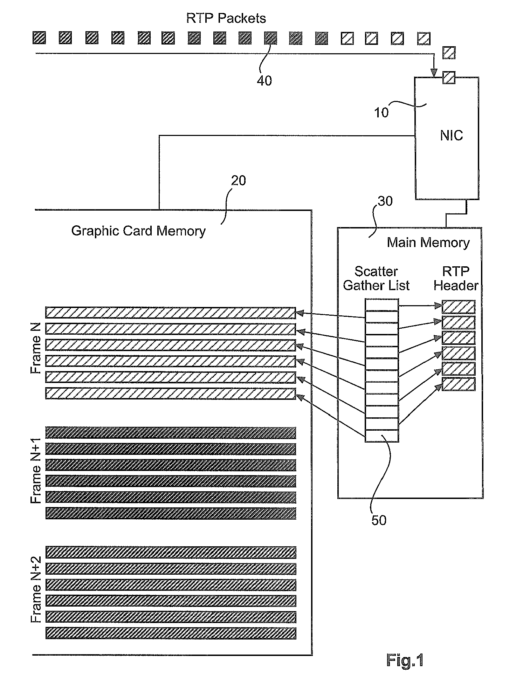

Fig. 1 shows a schematic representation of an assembly comprising a network interface card (NIC) 10, a graphic card memory 20, a main memory 30, and a stream of data packets 40 received by the NIC 10. The main memory 30 belongs to a computer system, e.g. a personal computer (PC). In the embodiment depicted, the stream of data packets 40 is provided as an RTP ("Real Time Protocol") video stream. In this simplified scenario three video frames are transmitted. Each frame consists of six rows, and each row is transferred within one RTP data packet. The RTP video data packets are transferred by a zero-copy mechanism from the NIC 10 to graphic card memory 20, i.e. the RTP video data packets are written into the graphic card memory 20 without any buffering or intermediate storage in some other memory. A DMA (Direct Memory Access) controller can take care of the transfer from the NIC to the graphic card.

A scatter gather list 50 accessed by the NIC 10 points to memory regions in the main memory 30 and the graphic card memory 20. The graphic card memory 20 can buffer three frames. In case no error occurs during transmission, each RTP data packet's payload is transferred to the correct memory region on the graphic card memory 20.

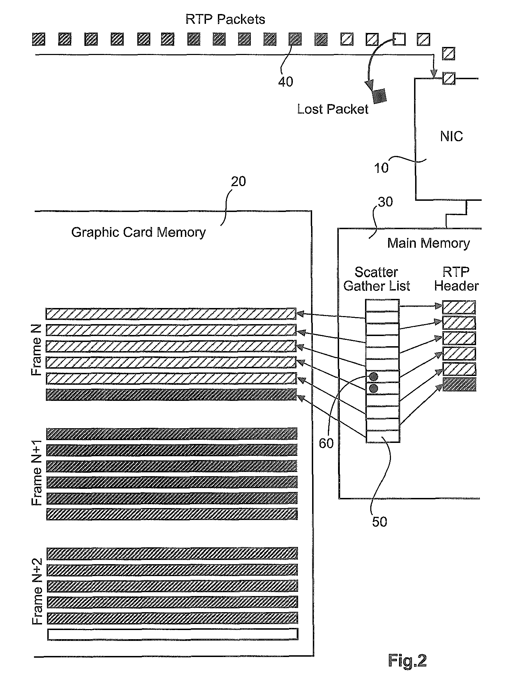

Fig. 2 shows another schematic representation of the assembly in Fig. 1, wherein a loss of a data packet is schematically depicted.

The scatter gather list 50 entries marked with a dot 60 point to memory regions that should have been occupied by the lost data packet. But the entries are now used to copy subsequent data packets, namely data packets following the lost data packet, which results in an offset of one row for all consequent video frames.

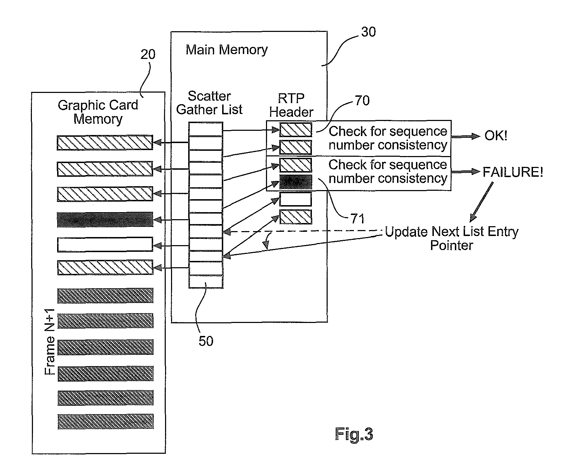

Fig. 3 shows a schematic representation of a subgroup of elements of the assembly in Fig. 1, namely the graphic card memory 20, and the main memory 30.

In the embodiment depicted, two RTP data packet headers 70, 71 are treated as a chunk and checked for consistent sequence number progress. In case a data packet loss error is detected, the scatter gather list 50 is updated immediately. Here the pointer to the next list entry is just moved to the next entry. By this means just the 4^{th} and 5^{th} row of video frame N are corrupted while the subsequent frames are displayed correctly. Since, in our example, the graphic card memory 20 buffers three frames, it's also possible to initiate a process that realigns already incorrectly placed video lines before the frame is displayed.

In a high resolution stream the RTP header chunks need to be much larger. Considering effective data rates of around 7.4 Gbps currently possible with 10 Gbps Ethernet cards, and RTP data packet sizes of 8900 bytes, the resulting data packet frequency is higher than 100000/s. If sequence number checking was done in an interrupt service routine and was performed for each single RTP data packet, it would result in more than 100000 interrupts per second. This rate is relatively high compared to a CPU frequency of, e.g., 2.3 GHz. So reasonable chunk sizes (in the following also called analysis window sizes) should reduce this rate by a factor of 10-100, i.e., each chunk of 10-100 RTP data packets is checked for correct sequence number progress. In case an error/gap is detected, the method described above is applied in order to place following data packets into the right memory location. If the mechanism detects data packets received out of order within an analysis window, it can initiate a process that reorders the affected memory region. In case data packet reordering takes place across analysis window borders the procedure is a bit more complicated.

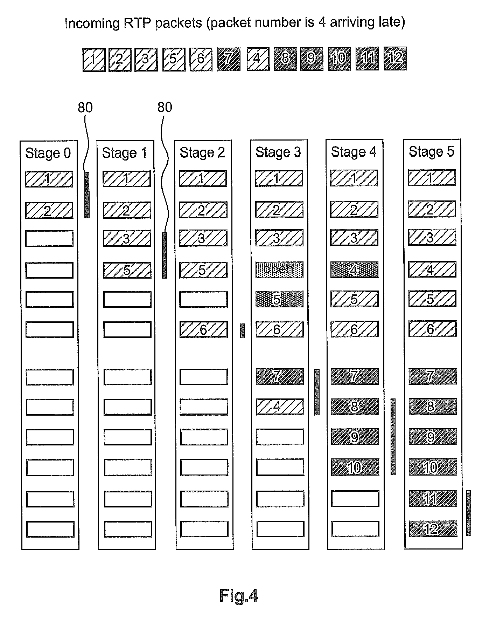

Fig. 4 shows a schematic representation for the placement of data packets in the graphic card memory 20.

In the received RTP stream data packet number 4 arrives after data packet number 7. In the depicted embodiment, an analysis window of two data packets is used, i.e., a chunk of two consequent data packets is checked for consistent RTP sequence numbers. The moving window is shown as a bar 80. In stage 1 an inconsistency is detected. At this moment it is identified as a data packet loss since the mechanism cannot look into the future. According to the procedure described above the pointer in the scatter gather list 50 is updated, and data packet number 6 is placed at its correct memory location.

In the meantime data packet number 5 is copied to its correct location. Destination memory for data packet number 4 is marked as "open". Thus, in case the corresponding data packet arrives in time, i.e., before the frame needs to be displayed by an output device (not shown), it can be copied there. Otherwise an appropriate error correction mechanism can be applied, e.g., copy the corresponding region from the previous frame to this location. In this case the "open" attribute is removed and if data packet number 4 arrived later it would be discarded.

In the embodiment at stage 3 the late data packet number 4 is received. It can be copied immediately to the "open" position and the pointer of the scatter gather list 50 can be updated. In this case the pointer needs to be moved backwards and point again to the position for data packet number 8. The "open" attribute needs to be removed from memory location for data packet 4. From now on the data packets are placed immediately at the right memory location until the next inconsistency is detected. Depending on the detected inconsistency the analysis window size might be adapted temporarily (cf. stage 2 and 4 described above).

The features of the invention as disclosed in the above description, in the claims and in the drawing may be of importance for the implementation of the various embodiments of the invention both individually and in any desired combination.

## Claims

1. A method for transferring data packets from a source entity (10) connected to a network into a destination entity (20) by a zero-copy mechanism over a data transfer connection, the comprising steps of:
- sending, by the source entity (10), the data packets received from the network to the destination entity (20) over the data packet transfer connection,
- receiving the data packets by the storage entity (20), and
- storing the received data packets in a memory space of the destination entity (20) according to a data packet memory assignment (50),
wherein for the received data packets a consistency of order check is performed for the received data packets, and the data packet memory assignment (50) is updated according to a data packet order update information indicating an inconsistency of order in the received data packets when the inconsistency of order is observed in the consistency of order check.

2. The method according to claim 1, wherein the received data packets are stored according to a data packet memory assignment (50) selected from the following group of data packet memory assignments: a scatter gather list, a memory assignment map, and a memory assignment table.

3. The method according to claim 1 or 2, wherein the data packets are transferred as a video data packet stream.

4. The method according to at least one of the preceding claims, wherein the consistency of order check comprises a header information check for the received data packets.

5. The method according to at least one of the preceding claims, wherein a RTP protocol (RTP - "Real Time Transport") is used for sending the data packets over the data packet transfer connection.

6. The method according to at least one of the preceding claims, wherein for the received data packets the consistency of order check is performed for separated chunks of data packets made of a plurality of received data packets.

7. The method according to at least one of the preceding claims, wherein at least one received data packet already stored in the memory space is corrected according to an error correction mechanism after the inconsistency of order is observed in the consistency of order check.

8. The method according to at least one of the preceding claims, wherein the data packets received from the network are sent by a network interface card to the destination entity (20) over the data packet transfer connection.

9. The method according to at least one of the preceding claims, wherein the data packets are received by a graphic memory card, and the received data packets are stored in a graphic memory space (20) provided in the graphic memory card.

10. A computer network assembly, especially a video or film production computer network assembly, comprising a software-implemented order check module configured to perform a method according to at least one of the preceding claims.

11. The computer network assembly according to claim 10,
wherein the order check module is configured to function with a driver module of a network card (10).

12. The computer network assembly according to claim 11,
wherein the order check module at least partially is implemented in the driver module of the network card (10).

13. A network station as destination entity in the method according to one of the claims 1 to 9, comprising:
- means for receiving data packets,
- means for storing the received data packets in a memory space according to a data packet memory assignment (50),
- means for performing a consistency of order check for the received data packets, including means for updating the data packet memory assignment (50) according to a data packet order update information indicating an inconsistency of order in the received data packets when the inconsistency of order is observed in the consistency of order check.

14. The network station according to claim 13, wherein the data packet memory assignment (50) is selected from the following group of data packet memory assignments: a scatter gather list, a memory assignment map, and a memory assignment table.

15. The network station according to claim 13 or 14, wherein the consistency of order check performing means comprise a header information check means for the received data packets.

16. The network station according to at least one of the claims 13 to 15, wherein consistency of order check performing means are adapted to performed the check for separated chunks of data packets made of a plurality of received data packets.

17. The network station according to at least one of the claims 13 to 16, comprising a graphic memory card, in which the received data packets are stored in a graphic memory space (20) provided in the graphic memory card.
